# EUROPEAN PATENT APPLICATION

(11) **EP 1 127 649 A1**
(43) Date of publication of application: **29.08.2001**
(21) Application number: 00200626.0
(22) Date of filing: 23.02.2000
(51) Int. Cl.: B23K 9/035, B23K 9/173

(54) **Method for welding aluminium profiles and profiles produced with this method**

(71) Applicant: Corus Aluminium Profiltechnik Bonn GmbH, 53117 Bonn (DE)
(72) Inventor: Bosman, Arnoldus Wilhelmus Maria, 1901 WH Castricum (NL); van Veen, Johan Frank, 1827 GT Alkmaar (NL); de Wit, Engbert Jan, 1966 MA Heemskerk (NL)
(74) Representative: Kruit, J., Ir.

(57) **Abstract**

The invention relates to a method for welding aluminium profiles (10,13), in which two profiles having projecting edges (11,14) are placed side by side, the projecting edges having a thickness of 1 to 10mm and a first side and an opposite second side, in which two adjacent edges of the two profiles together form a groove (15), for instance a V-shaped groove, in the first side, and the adjacent edges are welded together using MIG arc welding.

The method is characterised in that against the second side of the adjacent edges a massive backing (12) is placed, and in that the welding is executed as High Speed MIG arc welding.

The invention also relates to an assembly of two or more profiles, connected using the above method.

## Description

The invention relates to a method for welding aluminium profiles, in which two profiles having projecting edges are placed side by side, the projecting edges having a thickness of 1 to 10 mm and a first side and an opposite second side, in which two adjacent edges of the two profiles together form a groove, for instance a V-shaped groove, in the first side, and the adjacent edges are welded together using MIG arc welding. The invention also relates to an assembly of two or more aluminium profiles produced with this method.

The welding of aluminium profiles is well known in the art. To form a construction with a greater width than the individual profiles, for instance to produce the floor or the roof of a railway car with a length of 30 metres, the profiles are welded side by side. For the welding the generally known MIG arc welding can be used. The welding seam is formed in a standard groove located at the place where two projecting edges of two profiles contact each other. MIG arc welding is possible for edges having a thickness of 1 to 10 mm.

To position the profiles side by side with their edges exactly in the same plane, it is customary to provide one of the edges with a tongue or lip on its second side, which tongue or lip projects under the other edge. When such a tongue or lip is present at both sides of the profiles, the profiles can be easily positioned in line and in the same plane. Often, the tongue or lip on one edge is received in a kind of chamber formed by the other edge and a protruding rim at the underside of this other edge.

For the standard MIG arc welding it has been known for years that the tongue or lip under the groove should not contact the welding spot, but be hollow under the groove. It is supposed that this is necessary for the heat flow during the welding process, since otherwise the heat would be given off to the surrounding material too fast.

It is a disadvantage of the known MIG arc welding of aluminium profiles that the welding speed is limited.

It is an objective of the invention to provide a method for welding aluminium profiles using MIG arc welding, with higher welding speed than is possible up till now.

According to the invention, this objective is reached with the method for welding aluminium profiles according to the preamble, in which against the second side of the adjacent edges a massive backing is placed, and the welding is executed using High Speed MIG arc welding.

It has been found that MIG arc welding with high welding speed is possible if, contrary to the standard MIG arc welding, against the underside of the adjacent edges under the groove a massive backing is placed. Without this massive backing, High Speed MIG welding is not possible and it is to be understood that it is the combination of the measures, massive backing and High Speed MIG arc welding, that makes the invention work successfully and with a significant higher welding speed than standard MIG arc welding.

Preferably the High Speed MIG arc welding is executed with a welding speed that is approximately twice as high as the standard MIG arc welding speed. For both standard MIG arc welding and High Speed MIG arc welding the welding speeds depend on the thickness of the aluminium edges.

According to a preferred embodiment a massive backing is used which has a width of at least twice the thickness of the edges and which has a thickness that is substantially the same as the thickness of the edges.

Preferably, a massive backing is used that is attached to one of the two edges. In this way, the massive backing also performs the function of tongue or lip for positioning the profiles to be connected.

According to a preferred embodiment, the High Speed MIG arc welding is executed with a welding wire under an angle of at least 20° with the normal in welding direction at the welding spot. The standard MIG arc welding is executed with the welding wire under an angle of 5 to 8° with the normal. For High Speed MIG arc welding, a larger angle should be used.

Preferably, the High Speed MIG arc welding is executed with a welding wire under an angle of 25 - 40° with the normal at the welding spot. With these angles, the highest welding speeds can be reached.

According to a preferred embodiment, the High Speed MIG arc welding is executed on aluminium profiles made from a weldable aluminium alloy, such as the AA6xxx series, preferably AA6082, AA6005A, AA6106 or modifications thereof.

The invention also relates to an assembly of two or more aluminium profiles which have been MIG arc welded side by side, in which their welded seams haven been formed using the above method according to the invention.

The invention will be elucidated referring to an exemplary embodiment, in view of the accompanying drawing.

Fig. 1 shows, in cross-section, part of two profiles according to the state of the art.

Fig. 2 shows, in cross-section, part of two profiles according to the invention.

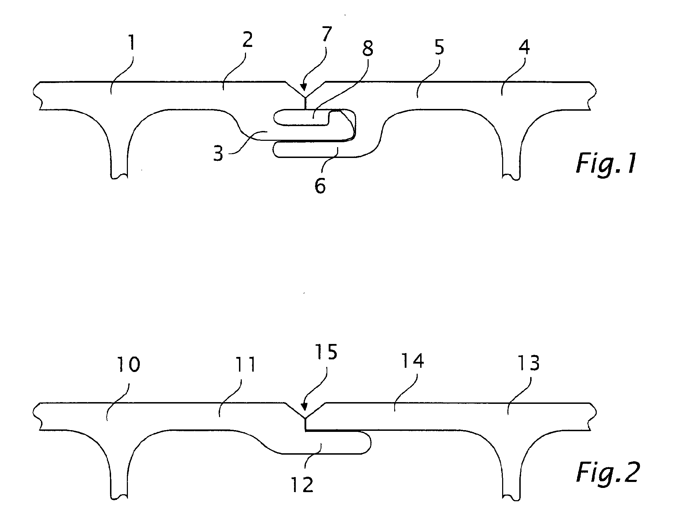

In fig. 1 the situation according to the state of the art is shown. Two profiles 1 and 4 are partly shown in cross-section. Profile 1 has a projecting edge 2 possessing a tongue 3. Profile 4 has an projecting edge 5 with a rim 6 to receive the tongue 3. The edges 2 and 5 form a V-shaped groove 7 for a welding seam. The tongue 3 is hollow so as to form an open space 8 under the V-shaped groove. Using this configuration, with conventional MIG arc welding the maximum welding speed is limited and depends on the thickness of the edges. High Speed MIG welding is not possible.

In fig. 2 the situation according to the invention is shown. Two profiles 10 and 13 are partly shown in cross-section. Profile 10 has a projecting edge 11 possessing a lip 12 which fits under a projecting edge 14 of profile 13. The projecting edges 11 and 14 together form a V-shaped groove 15, in the same way as the edges 2 and 5 form the V-shaped groove 7.

The lip 12 forms a massive backing against the underside of the edges 11, 14 at the location of the V-shaped groove. Due to this massive backing 12 it is possible to use High Speed MIG arc welding to connect the two edges of the two profiles, resulting at a welding speed that is approximately twice as high as the welding speed reached with conventional MIG arc welding for a certain thickness of the edges under shielding gas Ar 4.6. For other shielding gasses, such as a mixture of Ar and He, still higher speeds are possible.

The High Speed MIG arc welding has been executed with a welding wire under an angle of 25 to 40° with the normal in welding direction.

The edges to be welded must have a thickness between 1 and 10 mm.

The High Speed MIG arc welding according to the invention is especially suited for aluminium profiles made from aluminium alloys of the AA6xxx series.

Though not shown in fig. 2, for the profiles 10, 13 according to the invention it is possible to accommodate profile 13 with a rim in the way the known profile 4 has a rim 6, to form a chamber for the massive lip 12.

The invention is elucidated for two profiles in the same plane. It will be understood that the invention can also be used when the edges of the two profiles enclose an angle that differs from 180°.

## Claims

1. Method for welding aluminium profiles, in which two profiles having projecting edges are placed side by side, the projecting edges having a thickness of 1 to 10 mm and a first side and an opposite second side, in which two adjacent edges of the two profiles together form a groove, for instance a V-shaped groove, in the first side, and the adjacent edges are welded together using MIG arc welding, characterised in that against the second side of the adjacent edges a massive backing is placed, and in that the welding is executed using High Speed MIG arc welding.

2. Method according to claim 1, characterised in that the High Speed MIG arc welding is executed with a welding speed that is approximately twice as high as standard MIG arc welding.

3. Method according to claim 1 or 2, characterised in that a massive backing is used which has a width of at least twice the thickness of the edges and which has a thickness that is substantially the same as the thickness of the edges.

4. Method according to any one of the preceding claims, characterised in that a massive backing is used that is attached to one of the two edges.

5. Method according to any one of the preceding claims, characterised in that the High Speed MIG arc welding is executed with a welding wire under an angle of at least 20° with the normal in welding direction at the welding spot.

6. Method according to claim 5, characterised in that the High Speed MIG arc welding is executed with a welding wire under an angle of 25 - 40° with the normal at the welding spot.

7. Method according to any one of the preceding claims, characterised in that the High Speed MIG welding is executed on aluminium profiles made from weldable aluminium alloys, such as the AA6xxx series, preferably AA6082, AA6005A, AA6106 or modifications thereof.

8. Assembly of two or more aluminium profiles which have been MIG arc welded side by side, characterised in that their welded seams haven been formed using the method according to any one of the preceding claims.
